# EUROPEAN PATENT SPECIFICATION

(11) **EP 2 566 345 B1**
(45) Date of publication and mention of the grant of the patent: **27.07.2016**
(21) Application number: 11714332.1
(22) Date of filing: 15.04.2011
(51) Int. Cl.: A23G 9/48, A23G 9/46

(54) **FROZEN CONFECTIONERY WITH AERATED COATING**
GEFRORENE SÜSSWAREN MIT LUFTDURCHSETZTER BESCHICHTUNG
CONFISERIE GLACÉE AVEC REVÊTEMENT AÉRÉ

(30) Priority: 04.05.2010 EP 10161891
(43) Date of publication of application: 13.03.2013
(73) Proprietor: Nestec S.A., 1800 Vevey (CH)
(72) Inventor: PALZER, Stefan, Earswick Yorkshire YO32 9FX (GB); BAUER, Werner, CH-1095 Lutry (CH); CHISHOLM, Helen, CH-1033 Cheseaux (CH); NIEDERREITER, Gerhard, CH-1073 Savigny (CH); BOVET, Nicolas, CH-1665 Estavannens (CH)
(74) Representative: Elleby, Gudrun
(86) International application number: PCT/EP2011/056039
(87) International publication number: WO 2011/138153

(56) References cited:
- EP-A2- 0 322 952
- WO-A1-00/64269
- WO-A1-01/15543
- WO-A1-01/30174
- DE-C- 848 736
- GB-A- 1 297 579
- US-B1- 6 214 394

## Description

### Field of the invention

The present invention pertains to coated frozen confectioneries with a delayed melting behaviour and improved sensory properties at low temperature. In particular, it relates to a frozen confectionery or ice cream product coated with a chocolate-based aerated composition.

### Background of the invention

Edible coatings are commonly used in frozen confectionery products. They provide a texture or taste contrast and improve the organoleptic properties of the product. On the other hand, coatings have the essential function of delaying melting of the ice confectionery coated therewith and preventing it from dripping during consumption.

The most commonly used coatings in the frozen dessert industry are fat-based coatings. These usually consist in milk, sweetening agent, cocoa and fat. Although delaying the melting of the ice cream compared to a product that would not be coated, these fat-based products are not practical from a handling point of view as they often use lower melting point fats, adapted to lower temperatures for ease of consumption when in contact with ice cream, but which tend to melt at room temperature.

Modifying the composition of such coatings in order to increase their melting point i.e. making use of "real" chocolate coating defined by regulatory guideline for chocolate definition e.g. EU directive 2000/36/EC gives some issues in terms of the sensory properties of the coating. In fact, compositions with a higher melting point such as chocolate-based compositions used in the confectionery area will then be too hard to be easily broken by the teeth at ice cream consumption temperatures. On the other hand, a solution based on using a thicker coating to delay its melting cannot be applied as again a thick layer might be difficult to break with teeth.

There is thus a need for a solution that would overcome the above-mentioned problems. The present invention is providing such a solution based on the use of aerated chocolate as a coating for a frozen confectionery product. Aerated chocolate is known for its use in the confectionery area either as such or as a coating for composite products.

US 4,410,552 describes for example a composite confection material which associates a dense first portion of semi-plastic material with high level of flavour components, with a second portion of expanded fat-based material.

WO 01/15543 relates to the successive application of a coating of aerated liquid confectionery material and a coating of relatively un-aerated liquid confectionery material on a confectionery item. Although mentioning frozen confectionery as a possible product to be coated, ice confection is clearly not really considered as the technical constraints associated with this type of product such as those coming from the complexity of a process for coating a frozen mix are not addressed and the process described is not applicable to frozen confection.

EP-0322952-A2 discloses combinations of frozen confectionery with aerated glazes.

Therefore, the application of an aerated coating to a frozen confectionery has never been really considered by any prior art and the technical issues related to this particular application such as the ice confection melting behaviour, the consumption temperature, or yet the thermal conduction problems faced by existing fat coatings have never been addressed heretofore.

### Object of the invention

There thus remains a need to develop an improved coating for frozen confectionery, which has improved melting behaviour together with excellent sensory properties, good insulation properties and which is appropriate in terms of process ability for the coating of a frozen confectionery.

### Summary of the invention

Accordingly, this is achieved by the features of the independent claims. The dependent claims further develop the central idea of the invention.

In the following description, the percentages values are in wt% unless otherwise specified.

In a first aspect, the invention provides a composite frozen confectionery product comprising an ice confection core fully coated with a chocolate-based coating, wherein the coating consists of aerated chocolate-based composition having a density comprised between 0.13 to 0.65g/cm³.

The use of an aerated chocolate-based composition to coat a frozen confection is a second object of the invention. Finally, a method for producing a composite frozen confectionery comprising the steps of:
a. Preparing a chocolate-based foam with a density comprised between 0.13 and 0.65 g/cm³ comprising less than 33% of milk, from 25 to 40% of fat and from 20 to 55% sweetening agent; and
b. Coating a frozen ice confection mix with the chocolate-based foam,
and a coating obtainable by said method constitute further aspects of the invention.

### Figures

The present invention is further described hereinafter with reference to some of its embodiments shown in the accompanying drawings in which:
- Figure 1 is a flow chart illustrating a process for the preparation of a composite frozen confectionery according to the invention.
- Figure 2 shows the delayed melting of a product according to the invention compared with a product coated with non-aerated (solid) chocolate.

### Detailed description of the invention

In the frozen confectionery area, consumers are looking for products which deliver good taste along with convenience. In this context, bite-sized products are for example very much appreciated. However, they often present the drawback of melting pretty quickly at room temperature, which forces the consumer to eat them rapidly for obvious handling reasons. On the other hand, there is a constant demand from the consumer for products which are fun to consume and provide new sensory experience. The composite confectionery according to the present invention advantageously delay the melting of an ice confection, typically ice cream, by providing an insulation layer around the ice core which limits the thermal conduction and thus slows down temperature increase of the core. More particularly, the composite frozen confectionery of the present invention provides superior insulation for the ice core and superior sensory properties compared to un-aerated or solid chocolate in two ways. Firstly it provides better thermal insulating properties than a solid - non aerated - chocolate layer and secondly it allows the insulating layer used to be thicker, as aerated chocolate is brittle and easily broken by the teeth during consumption. Thus, the invention also provides a coating with a bite-able texture at ice cream consumption, namely at temperatures not higher than -10°C.

The composite frozen confectionery product of the invention comprises an ice confection core fully coated with a chocolate-based coating, wherein the coating consists of aerated chocolate-based composition having a density comprised between 0.13 and 0.65 g/cm³.

"Chocolate-based" can refer to either 'real' chocolate as defined by EU directive or similar local regulations, or a fat based compound coating with similar composition, behaviour and sensory properties but is outside the regulatory definition of chocolate i.e. fat composition is outside tight regulatory restrictions for chocolate for example there is insufficient cocoa butter present or >5% vegetable fat or vegetable fat used outside restricted list.

"Chocolate-based" composition or coating is thus meant to designate a product comprising at least one cocoa ingredient such as cocoa butter, cocoa butter improver, cocoa butter equivalent, cocoa butter substitute or cocoa butter replacer.

Both compound chocolate and "real" chocolate (in the sense of EU directive) are therefore "chocolate-based compositions" according to the invention.

The aerated chocolate-based coating from the composite product of the invention is advantageously used in the form of a layer which is thicker than traditional fat-based coatings while not compromising on the sensory properties of the final product. In a particular embodiment, the coating of the composite frozen confection of the invention has a thickness comprised between 3 and 20 mm, preferably between 4 and 10 mm.

According to a particular embodiment, in the composite product of the invention, the aerated chocolate-based coating constitutes an inner coating and the product further comprises an outer or secondary coating surrounding the inner coating and consisting of non-aerated chocolate.

According to a preferred embodiment, the composite frozen confection of the invention is a bite-size product or "bouchée" type product with a volume typically comprised between 1 and 20 ml, preferably between 2 and 10 ml. This format is very much appreciated by consumers and the invention provides a product that has a melting behaviour improved compared to the products known up-to date thus allowing new ways of consuming and enjoying the ice confection.

The composite frozen confectioneries of the invention can adopt various shapes and formats of frozen confectionery such as drops, spheres, cylinders, bars, cubes, pyramids or sticks.

The aerated ice confection core can be chosen from the group consisting of ice cream, Mellorine, frozen yogurt, frozen mousse, frozen fudge, frozen custard, fruit sorbet and sherbet.

The skilled person in the art knows these products and the ingredients typically combined in their respective compositions.

Preferably, the ice confection core is aerated and has an overrun of between 20 and 100%.

In the products of the invention, the ice confection core is coated with a chocolate-based composition which is aerated and has a density comprised between 0.13 and 0.65 g/cm³.

The aeration of the coating provides a new and particularly appreciated sensation to the consumer. Furthermore, the aeration allows using chocolate-based compositions which differ from traditional fat-based coating.

Therefore, preferably the chocolate-based coating is a "real" chocolate in the sense of the Directive 2000/36/EC of the European Parliament and of the Council of 23 June 2000 relating to cocoa and chocolate products intended for human consumption. According to the directive, "chocolate" contains up to 5% of vegetable fat other than cocoa butter and only six types of vegetable fats are permitted. Compared to the frequently used fat-based materials, real chocolate has better organoleptic properties and is perceived healthier and more natural by consumers.

The invention also allows the use of fat-based aerated or compound chocolate based on vegetable fats.

When based on real chocolate as defined above, the composite products of the invention are advantageously characterised by a higher melting point than products using traditional fat-based coatings. More particularly, the chocolate-based coating according to the invention preferably has a melting point ranging from 30 to 37°C, thus improving the melting behaviour of the composite frozen confections coated therewith at room temperature.

According to a first embodiment of the present invention, the coating from the composite frozen confection product of the invention is dark chocolate and comprises from 25 to 40% of fat, from 20 to 55% of sweetening agent, from 0.3 to 1% of emulsifier and is milk free.

According to a second embodiment of the invention, the coating from the composite frozen confection is milk chocolate and comprises from 12 to 25% milk, from 26 to 38% of fat, from 34 to 50% of sweetening agent and from 0.3 to 1% of emulsifier.

According to a third embodiment, the coating from the composite frozen confection is white chocolate and comprises from 14 to 33% of milk, from 29 to 40% of fat, from 37 to 50% of sweetening agent and from 0.3 to 1% of emulsifier.

The fat used in the coating compositions of the invention is preferably chosen from the group consisting of cocoa butter, cocoa butter improver, cocoa butter equivalent, cocoa butter substitute and cocoa butter replacer. More preferably, the fat is selected from cocoa butter, cocoa liquor, milk fat and mixtures thereof and permitted vegetable fats.

According to a particular embodiment, the total fat used in the chocolate-based coating composition does not exceed 40% by weight. This presents a further advantage versus standard fat-based coatings which typically include higher proportions of fat. Therefore, the coating from the composite frozen confectionery of the invention advantageously answers the consumer's demand for healthier products. Compared to a traditional fat-based coating the product of the invention can have a superior nutritional profile.

Typical sweetening agents used in the composition of the invention include sucrose, fructose, sweetening agent replacers such as polyols (e.g. maltitol, lactitol, isomalt, erythritol, sorbitol, mannitol, xylitol), bulking agents like polydextrose or other sweeteners like tagatose, high-intensity sweeteners like saccharin, aspartame, acesulfame-K, cyclamate, neohesperidin, thaumathin, sucralose, alitame, neotame, natural sweeteners like Stevia and any possible combinations thereof. Preferably, the sweetening agent used is sucrose.

Emulsifiers suitable for the purpose of the invention include natural and artificial emulsifiers. In the case of coumpound chocolate, examples of suitable emulsifiers include sugar esters, emulsifying waxes such as beeswax, carnauba wax, candedilla wax, plant or fruit waxes and animal waxes, polyglycerol fatty acid esters, polyglycerol polyricinoleate (PGPR), polysorbates (polyoxyethylene sorbitan esters), monoglycerides, diglycerides, YN (ammonium phosphatide), lecithin and mixtures thereof. In the case of "real" chocolate as defined above, suitable emulsifiers are those specified in local regulatory definition for chocolate e.g. lecithin.

Other ingredients, in particular cocoa powder, cocoa liquor or mixtures thereof can be added to the chocolate-based coating of the product of the invention. These ingredients give the coating a chocolate aspect and taste. The cocoa powder or the cocoa liquor used may be natural or alkalinised.

The use of an aerated chocolate composition to fully coat a frozen confection is another object of the invention.

A method for preparing a composite frozen confectionery as defined above is also an object of the invention.

The method comprises the steps of preparing a chocolate foam with a density comprised between 0.13 to 0.65 g/cm³ and comprising less than 33% milk, from 25 to 40% of fat and from 20 to 55% of sugar; and coating a frozen ice confection mix with said foam.

According to one embodiment, the coating step can be done by moulding techniques including pouring the foam in a mould and cooling it to a temperature comprised between 10 and 12°C, filling the mould with an ice confection mix at a temperature comprised between -15 and -20 °C, cooling the mould at a temperature comprised between -15 and -20 °C, closing the mould with chocolate foam, de-moulding and packing.

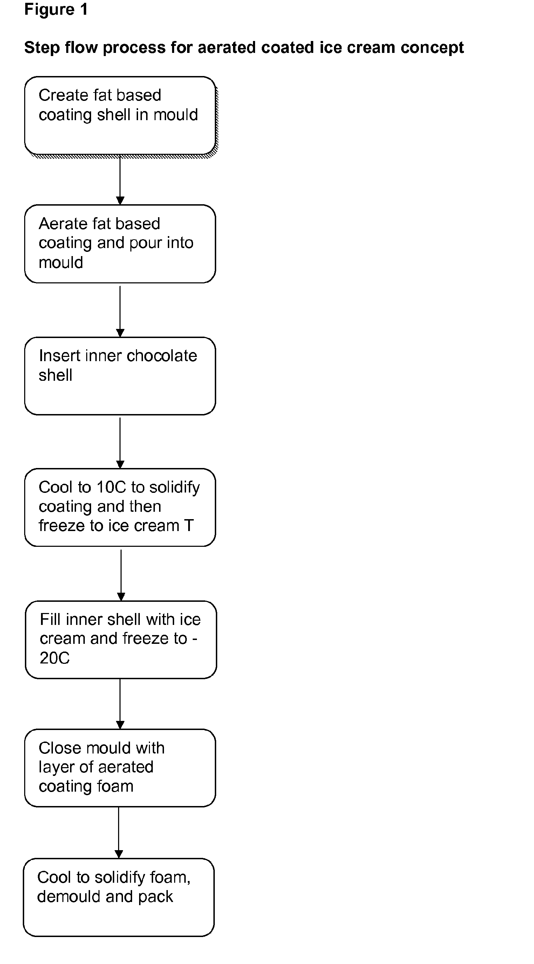

Figure 1 schematises said process.

The frozen ice confection mix can also be coated by dipping techniques including dipping the ice confection core into the foam and providing a successive coating.

According to a first embodiment, the chocolate foam has a minimum density of 0.65 g/cm³. Aeration is achieved using for example carbon dioxide with a positive pressure aeration process operating at 10 bars. A density of 0.65 g/cm³ can be achieved by this method. The obtained foam is characterised by a bubble size typically around 1 mm. X-ray tomography methods can be used to measure this size (diameter or equivalent diameter).

According to a second embodiment, the chocolate foam is prepared by vacuum expansion of a previously aerated liquid chocolate foam. According to this method, the foam structure varies from a very high gas volume ratio and better overrun and large bubbles to a moderate gas volume and smaller bubbles. This structure is characterised by thin cell walls and a fast-melting perception which both lead to a superior sensory perception. According to the second embodiment, the gas volume is comprised between 50 and 80% with a foam density between 0.65 and 0.26g/cm³. The average bubble size is around 0.1 to 1 mm.

According to a particular embodiment the product of the invention further comprises a secondary non-aerated coating. The non-aerated outer coating or 'shell' can be prepared as follows. A mould is filled with tempered liquid coating. The mould is then inverted to empty excess chocolate leaving a thin layer of coating in the mould. The temperature is reduced to 10 to 12°C in a cooling tunnel, solidifying the layer coating on the mould walls. This thin non aerated coating is known as a 'shell' and is very well known to skilled persons.

The compositions obtainable by the method described above fall under another aspect of the invention. These may be used as frozen confectionery coating and present the advantage of being low in fat.

The present invention is further illustrated by means of non-limiting examples.

### Examples

### Example 1: Ice cream coated with aerated milk chocolate

**Table 1: Chocolate-based coating recipe**

| **Ingredients** | **Amount (%)** |
|---|---|
| Sugar | 47 |
| Cocoa Butter | 17 |
| Cocoa Liquor | 25 |
| Milk Powder | 10.5 |
| Emulsifier | 0.4 |
| Vanilla | 0.04 |

The coating was made according to the standard chocolate or compound processing refining, conching and liquefying. Chocolate coating was held at 45°C to fully melt fat before tempering to achieve the correct crystal form. Coating was then aerated at 30°C in a closed pressure vessel to a density of 0.65 g/cm³. Foam was transferred to pre-made shelled chocolate moulds. While the foam was still liquid a small pre-made chocolate shell or cup was pushed into the foam in order to form a container for the ice cream centre. The product was cooled to between 10-12°C to solidify the aerated structure. The whole structure was then cooled to ice cream temperature namely -20°C.

**Table 2: Ice cream recipe**

| **Ingredient** | **Wt% of final product** |
|---|---|
| Fat | 1-10 |
| Sweetening agent or sweetening agent | 12-16 |
| MSNF | 2-10 |
| Emulsifier | 0.01-0.1 |
| Stabilizer | 0.2-0.8 |

The mix of ingredients was stored, homogenised, pasteurized at standard conditions before being stored at a temperature below 4°C. The mix was then cooled and aerated in a freezer with a temperature comprised between -3°C and -4°C, under a pressure comprised between 3 and 5 bars. An overrun of between 20 and 100% was provided.

The core composition was then dosed in individual portions by passage through an extruder equipped with a dosing head onto a conveyor belt. An equipment similar to that described in EP0141972 was used.

The hollow centre cup was filled with ice cream.
The product was finished by closing the cup with a further layer of foam coating.

### Example 2: Ice cream coated with aerated dark chocolate

**Table 3: Chocolate-based coating recipe**

| **Ingredients** | **Amount (%)** |
|---|---|
| Sugar | 50 |
| Cocoa Butter | 4.56 |
| Cocoa Liquor | 45 |
| Emulsifier | 0.4 |
| Vanilla | 0.04 |

The coating was made according to the process described in Figure 1. An ice cream core as described in Example 1 was coated with this aerated chocolate.

### Example 3: Comparative melting behaviour

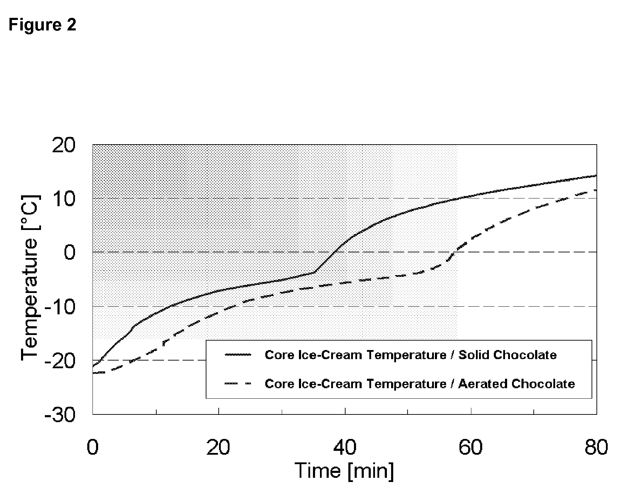

Figure 2 compares the melting behaviour of a product according to the invention (as described in example 1) with a product coated with a non-aerated chocolate (recipe from Table 1, example 1 without aeration).

Figure 2 shows that the product of the invention improves, or delays the melting of the ice confection core coated therewith, in particular at usual consumption temperature.

## Claims

1. A composite frozen confectionery product comprising an ice confection core fully coated with a chocolate-based coating, wherein the coating consists of an aerated chocolate-based composition with a density comprised between 0.13 and 0.65 g/cm³.

2. A composite frozen confectionery according to claim 1 **characterised in that** the coating has a thickness comprised between 3 and 20 mm, preferably between 4 and 10 mm.

3. A composite frozen confectionery according to claim 1 or 2, **characterised in that** it has a volume comprised between 1 and 20 ml, preferably between 2 and 10 ml.

4. A composite frozen confectionery according to any of claims 1 to 3 **characterised in that** it further comprises a secondary, non-aerated coating fully surrounding the aerated chocolate coating.

5. A composite frozen confectionery according to any of claims 1 to 4, **characterised in that** the ice confection core is selected from ice cream, Mellorine, frozen yogurt, frozen mousse, frozen fudge, frozen custard, sorbet and fruit sherbet.

6. A composite frozen confectionery according to claim 5, **characterised in that** the ice confection core has an overrun comprised between 20 and 100%.

7. A composite frozen confectionery according to any of claims 1 to 6, **characterised in that** the chocolate-based coating has a melting point comprised between 30 and 37°C.

8. A composite frozen confectionery according to claim 7, **characterised in that** the chocolate-based coating comprises from 25% to 40% by weight of fat, from 20% to 55% by weight of sweetening agent, from 0.3% to 1% by weight of emulsifier and is milk-free.

9. A composite frozen confectionery according to claim 7, **characterised in that** the chocolate-based coating comprises from 12% to 25% by weight of milk, from 26% to 38% by weight of fat, from 34% to 50% by weight of sweetening agent and from 0.3% to 1% by weight of emulsifier.

10. A composite frozen confectionery according to claim 7, **characterised in that** the chocolate-based coating comprises from 14% to 33% by weight of milk, from 29% to 40% by weight of fat, from 37% to 50% by weight of sweetening agent and from 0.3% to 1% by weight of emulsifier.

11. Use of an aerated chocolate composition to fully coat a frozen confection.

12. A method for producing a composite frozen confectionery as defined in claim 1, comprising the steps of
a. Preparing a chocolate-based mixture comprising from 0 to 33% of milk, from 25 to 40% of fat and from 20 to 55% sweetening agent and heating the ingredients to provide a melted mixture;
b. Aerating the melted mixture to provide a density comprised between 0.13 to 0.65 g/cm³;
c. Coating a frozen ice confection mix with the aerated chocolate mixture.

13. Method according to claim 12, wherein aeration is followed by vacuum expansion of the liquid foam and provides the chocolate mixture with a density comprised between 0.26 to 0.65 g/cm³.

14. Method according to any of claims 11 to 13, which comprises the application of a secondary non-aerated coating.

## Patentansprüche

1. Gefrorenes zusammengesetztes Konfektprodukt, umfassend einen Eiskonfektkern, der vollständig mit einem Überzug auf Schokoladenbasis überzogen ist, wobei der Überzug aus einer mit Luft durchsetzten Zusammensetzung auf Schokoladenbasis mit einer Dichte im Bereich von 0,13 und 0,65 g/cm³ besteht.

2. Gefrorenes zusammengesetztes Konfektprodukt nach Anspruch 1, **dadurch gekennzeichnet, dass** der Überzug eine Dicke im Bereich von 3 bis 20 mm, vorzugsweise von 4 bis 10 mm, aufweist.

3. Gefrorenes zusammengesetztes Konfektprodukt nach Anspruch 1 oder 2, **dadurch gekennzeichnet, dass** es ein Volumen im Bereich von 1 bis 20 ml, vorzugsweise von 2 bis 10 ml, aufweist.

4. Gefrorenes zusammengesetztes Konfektprodukt nach einem der Ansprüche 1 bis 3, **dadurch gekennzeichnet, dass** es ferner einen zusätzlichen nicht mit Luft durchsetzten Überzug umfasst, welcher den mit Luft durchsetzten Schokoladenüberzug vollständig umgibt.

5. Gefrorenes zusammengesetztes Konfektprodukt nach einem der Ansprüche 1 bis 4, **dadurch gekennzeichnet, dass** der Eiskonfektkern ausgewählt ist aus Speiseeis, Mellorin, gefrorenem Joghurt, gefrorenem Mousse, gefrorenem Fondant, gefrorener Vanillesauce, Sorbet und Fruchtsorbet.

6. Gefrorenes zusammengesetztes Konfektprodukt nach Anspruch 5, **dadurch gekennzeichnet, dass** der Eiskonfektkern einen Überschuss von 20 bis 100 % aufweist.

7. Gefrorenes zusammengesetztes Konfektprodukt nach einem der Ansprüche 1 bis 6, **dadurch gekennzeichnet, dass** der Überzug auf Schokoladenbasis einen Schmelzpunkt zwischen 30 und 37 °C aufweist.

8. Gefrorenes zusammengesetztes Konfektprodukt nach Anspruch 7, **dadurch gekennzeichnet, dass** der Überzug auf Schokoladenbasis von 25 bis 40 Gew.-% Fett, von 20 bis 55 Gew.-% Süßungsmittel, von 0,3 bis 1 Gew.-% Emulgator umfasst und milchfrei ist.

9. Gefrorenes zusammengesetztes Konfektprodukt nach Anspruch 7, **dadurch gekennzeichnet, dass** der Überzug auf Schokoladenbasis von 12 bis 25 Gew.-% Milch, von 26 bis 38 Gew.-% Fett, von 34 bis 50 Gew.-% Süßungsmittel und von 0,3 bis 1 Gew.-% Emulgator aufweist.

10. Gefrorenes zusammengesetztes Konfektprodukt nach Anspruch 7, **dadurch gekennzeichnet, dass** der Überzug auf Schokoladenbasis von 14 bis 33 Gew.-% Milch, von 29 bis 40 Gew.-% Fett, von 37 bis 50 Gew.-% Süßungsmittel und von 0,3 bis 1 Gew.-% Emulgator aufweist.

11. Verwendung einer mit Luft durchsetzten Schokoladenzusammensetzung zum vollständigen Überziehen eines gefrorenen Konfekts.

12. Verfahren zur Herstellung eines gefrorenen zusammengesetzten Konfekts nach Anspruch 1, umfassend die folgenden Schritte:
a. Herstellen einer Mischung auf Schokoladenbasis, umfassend von 0 bis 33 % Milch, von 25 bis 40 % Fett und von 20 bis 55 % Süßungsmittel und Erwärmen der Inhaltsstoffe um eine geschmolzene Mischung bereitzustellen;
b. Durchsetzen der geschmolzenen Mischung mit Luft, um eine Dichte im Bereich von 0,13 bis 0,65 g/cm³ bereitzustellen;
c. Überziehen einer gefrorenen Eiskonfektmischung mit der mit Luft durchsetzten Schokoladenmischung.

13. Verfahren nach Anspruch 12, wobei auf das Durchsetzen mit Luft eine Vakuumexpansion des flüssigen Schaums folgt und das Durchsetzen mit Luft der Schokoladenmischung eine Dichte im Bereich von 0,26 bis 0,65 g/cm³ bereitstellt.

14. Verfahren nach einem der Ansprüche 11 bis 13, das die Anwendung eines zusätzlichen nicht mit Luft durchsetzten Überzugs umfasst.

## Revendications

1. Produit de confiserie surgelé composite comprenant un noyau de confiserie surgelée complètement enrobé d'un enrobage à base de chocolat, dans lequel l'enrobage est constitué d'une composition aérée à base de chocolat avec une masse volumique comprise entre 0,13 et 0,65 g/cm³.

2. Confiserie surgelée composite selon la revendication 1, **caractérisée en ce que** l'enrobage a une épaisseur comprise entre 3 et 20 mm, de préférence entre 4 et 10 mm.

3. Confiserie surgelée composite selon la revendication 1 ou 2, **caractérisée en ce qu**'elle a un volume compris entre 1 et 20 ml, de préférence entre 2 et 10 ml.

4. Confiserie surgelée composite selon l'une quelconque des revendications 1 à 3, **caractérisée en ce qu**'elle comprend en outre un enrobage secondaire, non aéré, entourant complètement l'enrobage de chocolat aéré.

5. Confiserie surgelée composite selon l'une quelconque des revendications 1 à 4, **caractérisée en ce que** le noyau de confiserie surgelée est choisi parmi crème glacée, mellorine, yaourt glacé, mousse glacée, fudge glacé, crème anglaise glacée, sorbet et sorbet aux fruits.

6. Confiserie surgelée composite selon la revendication 5, **caractérisée en ce que** le noyau de confiserie surgelée a un dépassement compris entre 20 et 100 %.

7. Confiserie surgelée composite selon l'une quelconque des revendications 1 à 6, **caractérisée en ce que** l'enrobage à base de chocolat a un point de fusion compris entre 30 et 37 °C.

8. Confiserie surgelée composite selon la revendication 7, **caractérisée en ce que** l'enrobage à base de chocolat comprend de 25 % à 40 % en poids de matière grasse, de 20 % à 55 % en poids d'agent édulcorant, de 0,3 % à 1 % en poids d'émulsifiant et est exempt de lait.

9. Confiserie surgelée composite selon la revendication 7, **caractérisée en ce que** l'enrobage à base de chocolat comprend de 12 % à 25 % en poids de lait, de 26 % à 38 % en poids de graisse, de 34 % à 50 % en poids d'agent édulcorant et de 0,3 % à 1 % en poids d'émulsifiant.

10. Confiserie surgelée composite selon la revendication 7, **caractérisée en ce que** l'enrobage à base de chocolat comprend de 14 % à 33 % en poids de lait, de 29 % à 40 % en poids de graisse, de 37 % à 50 % en poids d'agent édulcorant et de 0,3 % à 1 % en poids d'émulsifiant.

11. Utilisation d'une composition de chocolat aérée pour enrober complètement une confiserie surgelée.

12. Procédé pour la production d'une confiserie surgelée composite selon la revendication 1, comprenant les étapes consistant à
a. préparer un mélange à base de chocolat comprenant de 0 à 33 % de lait, de 25 à 40 % de matière grasse et de 20 à 55 % d'agent édulcorant et à chauffer les ingrédients pour fournir un mélange fondu ;
b. aérer le mélange fondu pour fournir une masse volumique comprise entre 0,13 et 0,65 g/cm³ ;
c. enrober un mélange de confiserie glacée avec le mélange de chocolat aéré.

13. Procédé selon la revendication 12, dans lequel l'aération est suivie d'une expansion sous vide de la mousse liquide et fournit au mélange de chocolat une masse volumique comprise entre 0,26 et 0,65 g/cm³.

14. Procédé selon l'une quelconque des revendications 11 à 13, qui comprend l'application d'un enrobage secondaire non aéré.
